**Europäisches Patentamt**

**European Patent Office**

**Office européen des brevets**

(19)

(11) **EP 1 705 609 A1**

(12) **EUROPÄISCHE PATENTANMELDUNG**

(43) Veröffentlichungstag:
27.09.2006 Patentblatt 2006/39

(51) Int Cl.:
*G06Q 30/00* (2006.01)   *H04M 3/493* (2006.01)

(21) Anmeldenummer: 05006389.0

(22) Anmeldetag: 23.03.2005

(84) Benannte Vertragsstaaten:
AT BE BG CH CY CZ DE DK EE ES FI FR GB GR HU IE IS IT LI LT LU MC NL PL PT RO SE SI SK TR
Benannte Erstreckungsstaaten:
AL BA HR LV MK YU

(71) Anmelder: Müller Marken GmbH & Co. Betriebs-KG
90402 Nürnberg (DE)

(72) Erfinder: Oschmann, Michael
90491 Nürnberg (DE)

(74) Vertreter: Tergau & Pohl Patentanwälte
Mögeldorfer Hauptstrasse 51
90482 Nürnberg (DE)

(54) **Vermittlungssystem zur Vermittlung von Adressen und/oder Leistungen gewerblicher Anbieter**

(57)     Es wird ein effizientes und benutzerseitig intuitiv erfassbares Vermittlungssystem (1) zur Vermittlung von Adressen und/oder Leistungen gewerblicher Anbieter (7) angegeben, mit einer Datenbank (2), in der eine Anzahl von jeweils Information zu einem spezifischen Anbieter (7) enthaltenden Anbieterdatensätzen (D) hinterlegt ist, sowie mit einem Auswahlmodul (3), das dazu ausgebildet ist, nach Maßgabe einer von einem anfragenden Benutzer (9) formulierten Suchanfrage (Q) aus der Datenbank (2) anfragerelevante Anbieterdatensätze (D') auszuwählen und eine die ausgewählten Anbieterdatensätze (D') enthaltende Trefferliste (L) zu generieren, wobei jedem Anbieterdatensatz (D) eine aus Einzelbewertungen (b) von bewertenden Benutzern (8,9,10) abgeleitete Gesamtbewertung (B) zugeordnet ist, und wobei die ausgewählten Anbieterdatensätze (D) in der Trefferliste (L) nach Maßgabe dieser Gesamtbewertung (B) geordnet sind.

EP 1 705 609 A1

**Beschreibung**

Die Erfindung bezieht sich auf ein Vermittlungssystem zur Vermittlung von Adressen und/oder Leistungen gewerblicher Anbieter.

Ein Beispiel eines solchen Vermittlungssystems ist ein Online-Unternehmensverzeichnis oder-Firmenverzeichnis. Über das rein passive Vermitteln von Anbieteradressen oder sonstiger "starr" vorgegebener Information hinaus dient ein Vermittlungssystem im oben genannten Sinne mitunter auch der direkten Vermittlung einer konkreten individuellen Geschäftsbeziehung zwischen einem Anbieter und einem anfragenden Benutzer, d.h. der Vermittlung einer bestimmten gewerblichen Leistung. Derartige Vermittlungssysteme sind beispielsweise auf die Vermittlung von bestimmten Finanzdienstleistungen oder Versicherungsverträgen über das Internet gerichtet.

Bei einem derartigen Vermittlungssystem folgt eine Auswahl möglicher Anbieter in der Regel anhand einer Branchenangabe oder einer auf eine bestimmte Leistung gerichteten Suchanfrage, gegebenenfalls unter zusätzlicher Angabe einer geografischen Eingrenzung. Relevante Anbieter werden hierbei durch das Vermittlungssystem ausgewählt und in einer Trefferliste gesammelt. Innerhalb der Trefferliste sind die ausgewählten Anbieter gewöhnlich alphabetisch geordnet.

Ein Nachteil herkömmlicher elektronischer Vermittlungssysteme besteht darin, dass aufgrund der von diesen Systemen üblicherweise verwalteten großen Datenmenge die auf eine Suchanfrage hin ausgegebene Trefferliste häufig eine unüberschaubar große Anzahl möglicher Anbieter enthält. Hierdurch wird in der Praxis die benutzerseitige Entscheidungsfindung bezüglich der Anbieterauswahl eher verkompliziert als erleichtert. Diese Situation wird verschärft durch die Tatsache, das der anfragende Benutzer zunächst keinen direkten Kontakt mit den vermittelten Anbietern erhält und hierdurch nur schwer einen Eindruck von der Vertrauenswürdigkeit des einzelnen Anbieters gewinnen kann. Der Anbieter bleibt somit (im wörtlichen oder übertragenen Sinne) in einem gewissen Grad anonym. Zumal die Vertrauenswürdigkeit eines potenziellen Geschäftspartners aber andererseits im täglichen Leben häufig ein wichtiges Entscheidungskriterium bei der Anbahnung von Geschäftskontakten ist, kann diese Anonymität für den anfragenden Benutzer ein wesentliches Hemmnis bei der Nutzung des Vermittlungssystems darstellen.

Bei elektronischen Auktionsverfahren ist mitunter als vertrauensfördernde Maßnahme vorgesehen, dass im Hinblick auf einen bestimmten getätigten Geschäftsabschluss die Vertragspartner gegenseitig Bewertungen abgeben können, die in einem jeweiligen, dem Verkäufer bzw. Käufer zugeordneten Benutzerprofil veröffentlicht werden.

Der Erfindung liegt die Aufgabe zugrunde, ein effektives Vermittlungssystem zur Vermittlung von Adressen und/oder Leistungen gewerblicher Anbieter anzugeben. Das Vermittlungssystem soll einem Benutzer ferner eine besonders intuitive Anbieterauswahl ermöglichen.

Diese Aufgabe wird erfindungsgemäß gelöst durch die Merkmale des Anspruchs 1. Danach umfasst das Vermittlungssystem eine Datenbank, in der eine Anzahl von Anbieterdatensätzen hinterlegt ist. Jeder Anbieterdatensatz stellt ein sogenanntes Anbieter- oder Firmenprofil dar, das Information zu dem spezifischen Anbieter, insbesondere Adress- und Kontaktdaten, Tätigkeitsfeld, Qualifikationen, etc. enthält. Das Vermittlungssystem umfasst weiterhin ein Auswahlmodul, das dazu ausgebildet ist, nach Maßgabe einer von einem Benutzer formulierten Suchanfrage aus der Datenbank anfragerelevante Anbieterdatensätze auszuwählen und eine entsprechende Trefferliste zu generieren. Die Trefferliste enthält die ausgewählten Anbieterdatensätze in Form einer Verknüpfung (Link) mit dem hinterlegten Anbieterdatensatz oder in Form einer vollständigen oder teilweisen Kopie der in dem Anbieterdatensatz enthaltenen Information.

Als Kriterium zur Anordnung der ausgewählten Anbieterdatensätze in der Trefferliste wird hierbei eine Gesamtbewertung herangezogen, die jedem Anbieterdatensatz zugeordnet ist, und die nach einem vorgebenden Algorithmus aus Einzelbewertungen von Benutzern abgeleitet ist. Der letzte Satz ist im Sinne eines mathematisch abstrakten Formalismus zu verstehen. In diesem Sinne ist dem Anbieterdatensatz auch dann eine "aus Einzelbewertungen abgeleitete Gesamtbewertung" zugeordnet, wenn die Anzahl der bisher zu diesem Anbieterdatensatz abgegebenen Einzelbewertungen 0 oder 1 beträgt.

Grundlage für die Erfindung bildet die Überlegung, geeignete technische Mittel zu finden, mit denen die Funktionalität des virtuellen Vermittlungssystems möglichst stark an das Geschäftsverhalten im nicht-elektronischen Bereich angepasst werden kann. Erkanntermaßen wird im täglichen Leben die Entscheidung für einen bestimmten Geschäftspartner insbesondere durch den "guten Ruf" des Anbieters geprägt, der wiederum in der Regel auf Empfehlungen Dritter basiert. Diese "Empfehlungsstrategie", d.h. die Entscheidungsfindung auf Empfehlungsbasis, funktioniert jedoch nur in einem überschaubaren Beziehungsnetzwerk zufriedenstellend, zumal jedes Individuum nur über eine begrenzte Anzahl von Kontakten verfügt, die als Empfehlungsgeber in Frage kommen, und diese wiederum nur aus einer begrenzten Anzahl der ihrerseits zugänglichen Kontakte schöpfen können. Ein derart überschaubares Beziehungsnetzwerk ist im täglichen Leben insbesondere durch das tägliche Lebensumfeld gegeben. Beispielsweise genügt es im heimatlichen Dorf oder Stadtteil in der Regel, die Nachbarn zu fragen, um auf Empfehlungsbasis für Dinge des alltäglichen Lebens geeignete Anbieter zu finden. Auf ein elektronisches Vermittlungssystem ist die oben skizzierte "Empfehlungsstrategie" dagegen aufgrund der üblicherweise unüberschaubaren Informationsmenge und dem Mangel an vertrauenswürdigen Empfehlungsgebem nicht direkt anwendbar.

Erfindungsgemäß gelingt diese Anpassung durch Einführung der statistisch ermittelten Gesamtbewertung als Ordnungskriterium für Trefferliste. Hierdurch werden gut bewertete Anbieter automatisch in den Vordergrund der Trefferliste gestellt, so dass der anfragende Benutzer auch bei einer beliebig hohen Trefferanzahl eine überschaubare und verwertbare Empfehlung erhält und somit auf intuitiv leicht erfassbare Weise in seiner Entscheidung hinsichtlich eines anzubahnenden Geschäftskontakts effektiv unterstützt wird.

In einer bevorzugten Ausführung des Vermittlungssystems wird die einem jeden Anbieterdatensatz zugeordnete Gesamtbewertung automatisch durch ein Bewertungsmodul berechnet. Das Bewertungsmodul passt die Gesamtbewertung dabei insbesondere jedes Mal an, wenn zu einem Anbieterdatensatz durch einen bewertenden Benutzer eine Einzelbewertung abgegeben wird.

Zweckmäßigerweise ist vorgesehen, dass alle Benutzer, insbesondere registrierte und unregistrierte Teilnehmer des Vermittlungssystems, Konsumenten und Anbieter, etc., Einzelbewertungen über einen bestimmten Anbieter abgeben können, so dass vorhandenes Wissen über einen bestimmten Anbieter besonders weitgehend für die Gesamtbewertung ausgeschöpft werden kann. Um andererseits eine besonders aussagekräftige, insbesondere missbrauchsunanfällige Gesamtbewertung zu erhalten, ist vorgesehen, die Einzelbewertungen je nach der "Vertrauenswürdigkeit" des bewertenden Benutzers unterschiedlich zu wichten. Als technisch ermittelbares Maß für die "Vertrauenswürdigkeit" des bewertenden Benutzers wird hierbei eine Statusangabe herangezogen, die das Verhältnis des bewertenden Benutzers zu dem Vermittlungssystem und/oder zu dem bewerteten Anbieter klassifiziert. Insbesondere wird der bewertende Benutzer dahingehend klassifiziert, ob er ein unregistrierter (anonymer) oder registrierter (bekannter) Teilnehmer des Vermittlungssystems ist, und ob er mit dem bewerteten Anbieter bereits in einer Geschäftsbeziehung steht bzw. stand.

In vorteilhafter Ausführung der Erfindung erfolgt jede Einzelbewertung differenziert nach einer vorgegebenen Anzahl von Bewertungskriterien (insbesondere Preis-Leistungs-Verhältnis, Pünktlichkeit, Qualität, etc.). Das Bewertungsmodul ist hierbei zweckmäßigerweise dazu ausgebildet, die einzelnen Bewertungskriterien nach Maßgabe von vorgegebenen Wichtungsfaktoren zu wichten, um deren Beitrag zu der Gesamtbewertung zu berücksichtigten. Die Wichtungsfaktoren sind im einfachsten Fall fest vorgegeben. In einer demgegenüber verbesserten Variante des Vermittlungssystems sind branchenspezifisch verschiedene Wichtungsfaktoren vorgegeben. Zusätzlich oder alternativ hierzu ist vorgesehen, dass die Wichtungsfaktoren benutzerspezifisch einstellbar sind.

Als weitere vertrauensfördernde Maßnahme ist vorgesehen, dass anbieterseitig mindestens eine Referenzadresse einer Referenzperson angebbar ist. Der Begriff "Referenzperson" bezeichnet hierbei bestimmungsgemäß eine Firma (oder gegebenenfalls eine Privatperson), die mit dem Anbieter bereits in Geschäftsbeziehung steht oder stand. Um wiederum besonders aussagekräftige, insbesondere missbrauchsunanfällige Referenzangaben zu erhalten, ist vorgesehen, die angegebenen Referenzadressen durch Nachfrage bei der Referenzperson zu bestätigen. Für eine automatisierte Durchführung dieses Bestätigungsschritts ist zweckmäßigerweise ein Referenzmodul vorgesehen, das dazu ausgebildet ist, eine Bestätigungsanfrage, z.B. per automatisch generierter E-Mail an die Referenzadresse auszusenden. Vorzugsweise ist das Referenzmodul weiter dazu ausgebildet, die angegebene Referenzadresse dem Anbieterdatensatz zuzuordnen, wenn die Referenzperson die Referenzanfrage (z.B. durch Rücksendung der genannten E-Mails, durch Mausklick auf eine zur Verfügung gestellte Schaltfläche, etc.) positiv quittiert.

In einer besonders vorteilhaften Ausführung des Vermittlungssystems ist die Bewertung eines Anbieters und die Überprüfung der von diesem angegebenen Referenzpersonen miteinander verknüpft, indem mit der an die Referenzperson gerichteten Bestätigungsanfrage gleichzeitig eine Aufforderung zur Bewertung des Anbieters generiert wird. Hierdurch wird die Erfahrung der angegebenen Referenzpersonen, die in der Regel den Anbieter besonders gut kennen, effektiv zur Erhöhung der Aussagekraft der Bewertung ausgenutzt. Der von einer Referenzperson abgegebenen Bewertung wird hierbei im Sinne des vorstehend angesprochenen Wichtungsschemas ein besonders hoher Status zugeordnet.

In einer einfachen Ausführung der Erfindung ist das Vermittlungssystem als passives Firmen- oder Unternehmensverzeichnis konzipiert, das dem anfragenden Benutzer lediglich die Trefferliste mit den ausgewählten Anbieterdatensätzen zur Verfügung stellt. In einer besonders bevorzugten Variante der Erfindung umfasst das Vermittlungssystem zusätzlich ein als Auftragsbörse wirkendes Kontaktmodul, das dazu ausgebildet ist, eine der Suchanfrage entsprechende Aufforderung an einen oder mehrere, gegebenenfalls alle in der Trefferliste aufgeführten Anbieter auszusenden, um diese zur Abgabe eines Angebots im Hinblick auf die Suchanfrage anzuregen. In bevorzugter Ausführung des Vermittlungssystems ist vorgesehen, dass diese Angebote durch die Anbieter an das Vermittlungssystem zurückgesandt werden. Das Kontaktmodul ist hierbei dazu ausgebildet, die Angebote an den anfragenden Benutzer weiterzuleiten. Hierdurch ist zwischen dem anfragenden Benutzer und jeweils einem Anbieter über das Kontaktmodul ein Kommunikationskanal gebildet, über den der Benutzer und der jeweilige Anbieter gegebenenfalls auch weitere Details klären können.

Das erfindungsgemäße Vermittlungssystem ist somit bevorzugt als Unternehmens-Netzwerk, d.h. als mehrkanaliges Dialog-Medium konzipiert, das als elektronisches Analogon zu einem Marktplatz einem nach einer bestimmten Leistung suchenden Benutzer mögliche Anbieter als Kommunikationspartner zu vermitteln sucht, wobei die Anbahnung von Geschäftskontakten durch Gesamtbewertungen der Anbieter und durch verifizierte Referenzen als technisch erfassbare Maßstäbe für den "guten Ruf" der Anbieter gefördert wird.

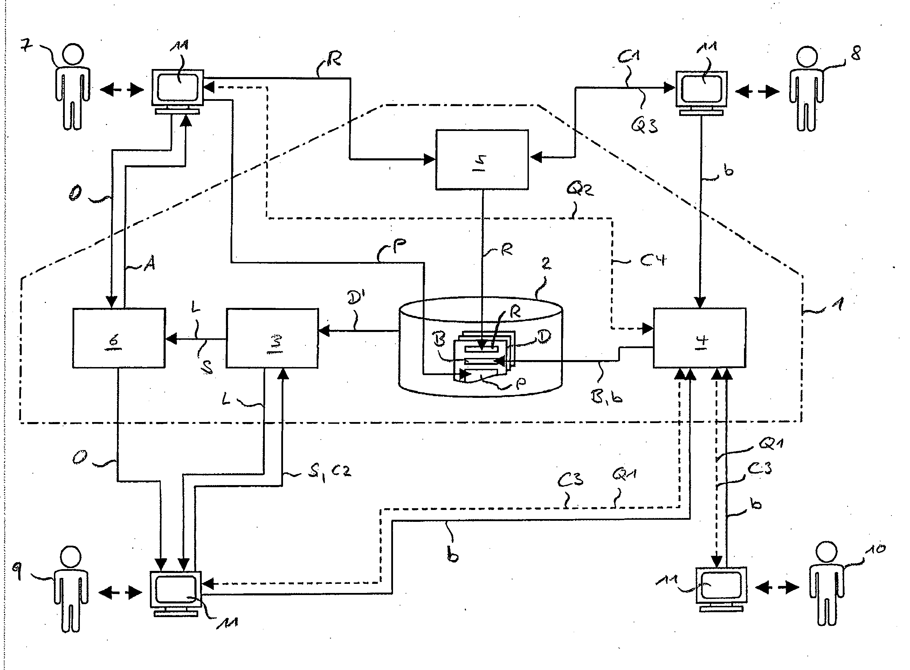

Nachfolgend wird ein Ausführungsbeispiel der Erfindung anhand einer Zeichnung näher erläutert. Darin zeigt die einzige Figur in einem schematischen Blockschaltbild ein elektronisches Vermittlungssystem zur Vermittlung von Adressen und Leistungen gewerblicher Anbieter.

Das Vermittlungssystem 1 umfasst eine zentrale Datenbank 2 sowie ein Auswahlmodul 3, ein Bewertungsmodul 4, ein Referenzmodul 5 sowie ein Kontaktmodul 6. Die Module 3,4,5 und 6 sind bevorzugt als Softwarebausteine realisiert, die in einer oder mehreren (nicht näher dargestellten) Rechneranlagen des Vermittlungssystems 1 implementiert sind.

in der Datenbank 2 sind eine Vielzahl von Anbieterdatensätzen D hinterlegt, deren jeder ein Anbieterprofil P (oder Firmenprofil) umfasst. Jedes Anbieterprofil P enthält Informationen, insbesondere Kontakt- und Adressdaten, Tätigkeitsschwerpunkte, Qualifikationen, etc. zu einem spezifischen Anbieter 7. Der Anbieter 7 kann nach Registrierung in dem Vermittlungssystem 1 das ihm zugeordnete Anbieterprofil P selbständig erstellen oder aktualisieren.

Optional enthält der Anbieterdatensatz D weiterhin eine oder mehrere Referenzadressen R bezüglich einer Referenzperson 8, die von dem Anbieter 7 angegeben werden kann. Bei der Referenzperson 8 handelt es sich bestimmungsgemäß um ein Unternehmen, jedoch möglicherweise auch um eine Privatperson, die zu dem Anbieters 7 bereits in geschäftlicher Beziehung steht bzw. stand, und die den Anbieters 7 daher kennt. Die Referenzadresse R umfasst zumindest den Namen und eine Email-Adresse der Referenzperson 8, optional weitere Angaben wie z.B. die Postanschrift, die eine eindeutige Identifizierung der Referenzperson 8 und gegebenenfalls eine Kontaktaufnahme mit dieser ermöglichen. Ist die Referenzperson 8 ebenfalls als Anbieter des Vermittlungssystems 1 registriert, so wird mit der Referenzadresse R zusätzlich eine Verknüpfung mit dem Anbieter-datensatz der Referenzperson 8 hinterlegt. Die von dem Anbieter 7 angegebene Referenzadresse R wird zunächst dem Referenzmodul 5 zugeleitet. Dieses holt (auf nachfolgend näher beschriebene Weise) bezüglich der Referenzadresse R zunächst eine Bestätigung C1 der Referenzperson 8 ein. Nach positiver Quittierung, d.h. erfolgreicher Bestätigung durch die Referenzperson 8 hinterlegt das Referenzmodul 5 die Referenzadresse R in dem dem Anbieter 7 zugeordneten Anbieterdatensatz D.

Der Anbieterdatensatz D umfasst weiterhin eine Gesamtbewertung B, in Form einer z.B. in einem Bereich zwischen 0 und 5 einstellbaren reellen Zahl, die ein Maß für den "guten Ruf" des Anbieters 7 darstellt, und die durch das Bewertungsmodul 4 (auf nachfolgend näher beschriebene Weise) anhand von Einzelbewertungen b der Referenzpersonen 8 sowie weiterer Benutzer 9 und 10 bezüglich des dem Anbieterdatensatz D zugeordneten Anbieters 7 abgegeben werden können.

Das Auswahlmodul 3 ist dazu ausgebildet, anhand einer Suchanfrage S eines anfragenden Benutzers (im dargestellten Funktionsbeispiel der Benutzer 9) anfragerelevante Anbieterdatensätze D' aus der Datenbank 2 auszuwählen und eine entsprechende Trefferliste L zu erzeugen, in der die ausgewählten Anbieterdatensätze D', geordnet nach der jeweils zugehörigen Gesamtbewertung B, in Form von Verknüpfungen (Links) aufgeführt sind. Die Trefferliste L wird dem anfragenden Benutzer 9 zugeleitet. Das Auswahlmodul 3 erfüllt somit in Zusammenwirkung mit der Datenbank 2 die Funktion eines Online-Branchenverzeichnisses, indem es dem Anbieter 7 die jeweiligen Anbieterprofile P der ausgewählten Anbieterdatensätze D' passiv zur Verfügung stellt.

Das Kontaktmodul 6 hat - über die Funktion eines reinen Branchenverzeichnisses hinausgehend - die Aufgabe, konkrete Geschäftskontakte zwischen dem anfragenden Benutzer 9 und dem Anbieter 7 herzustellen. Hierzu generiert das Kontaktmodul 6 unter Zugriff auf die Trefferliste L und die Suchanfrage S automatisch eine Aufforderung A zur Abgabe eines Angebots O bezüglich der Suchanfrage S und übermittelt diese Aufforderung A an in der Trefferliste L aufgeführte Anbieter 7. Wird ein solches Angebot O durch einen benachrichtigten Anbieter 7 an das Kontaktmodul 6 zurückgesandt, so leitet das Kontaktmodul 6 dieses an den anfragenden Benutzer 9 weiter.

Das Vermittlungssystem 1 ist in Form eines Internetportals konzipiert. Das Vermittlungssystem 1 ist insofern zur Kommunikation mit einer Vielzahl von Anbietern 7, Referenzpersonen 8 und sonstigen Benutzern 9 und 10 ausgelegt. Die Kommunikation zwischen dem Anbieter 7, der Referenzperson 8, den Benutzern 9 und 10 einerseits und dem Vermittlungssystem 1 andererseits erfolgt jeweils über eine Internet-Verbindung, wobei sich Anbieter 7, Referenzpersonen 8 und sonstige Benutzer 9,10 zu Kommunikationszwecken geeigneter Benutzerterminals 11, insbesondere internetfähiger Rechner bedienen. Die begriffliche Unterscheidung zwischen Anbietern 7, Referenzpersonen 8 und sonstigen Benutzern 9 und 10 ist im Hinblick auf die jeweils gegenüber dem Vermittlungssystem 1 ausgeübte Funktion des betreffenden Unternehmens bzw. der betreffenden Person gewählt und kann kontextspezifisch variieren. Insbesondere kann dieselbe Person oder dasselbe Unternehmen als Anbieter 7 in dem Vermittlungssystem 1 registriert sein, als Referenzperson 8 für andere Anbieter 7 fungieren, als Benutzer 9 Suchanfragen S stellen oder als Benutzer 9,10 Einzelbewertungen b über andere Anbieter 7 abgeben.

Die von dem Vermittlungssystem 1 ausgeübten Funktionsaspekte der Trefferlistengenerierung, Kontaktvermittlung, Bewertung und Referenzierung sind nachfolgend in näherem Detail beschrieben.

Im Zuge der Trefferlistengenerlerung stellt der anfragende Benutzer 9 zunächst über eine (nicht näher dargestellte) Suchmaske, die einen Bestandteil einer von dem Vermittlungssystem 1 zur Verfügung gestellten Benutzeroberfläche bildet, die Suchanfrage S. Die Formulierung der Suchanfrage S erfolgt nach Wahl des Benutzers 9 durch Angabe eines oder mehrerer Stichwörter (z.B "Hausrenovierung") oder durch Volltextangabe (z.B. "Ich möchte mein Haus renovieren lassen"). Optional kann der Benutzer 9 die Suchanfrage S durch eine regionale Eingrenzung, insbesondere durch Angabe eines Ortes, weiter spezifizieren. Das Auswahlmodul 3 ist dazu ausgebildet, anhand der Suchanfrage S, gegebenenfalls unter Berücksichtigung der geografischen Eingrenzung, die relevanten Anbieterdatensätze D' auszuwählen. Für diese Auswahl ermittelt das Auswahlmodul 3 aus der Suchanfrage S zunächst relevante Suchbegriffe. Insbesondere wenn die Suchanfrage S als Volltext angegeben ist, greift das Auswahlmodul 3 hierzu auf hinterlegte Linguistik-Algorithmen zurück, beispielsweise wird auf diese Weise aus der Zeichenkette "...Haus renovieren..." der standardisierte Suchbegriff "Hausrenovierung" abgeleitet.

Die so ermittelten Suchbegriffe werden im einfachsten Fall direkt mit entsprechenden Tätigkeitsangaben im Anbieterprofil P der hinterlegten Anbieter-datensätze D verglichen. Es werden dabei also diejenigen Anbieterdatensätze D'ausgewählt, im Rahmen derer der Schlüsselbegriff "Hausrenovierung" als Tätigkeitsfeld hinterlegt ist. Optional ermittelt das Auswahlmodul 3 zusätzlich anhand hinterlegter semantischer Verknüpfungs-Algorithmen ähnliche Suchbegriffe, untergeordnete Suchbegriffe oder ergänzende Suchbegriffe und führt nach diesen zusätzlichen Suchbegriffen eine erneute Suche innerhalb der in der Datenbank 2 hinterlegten Anbieterdatensätze D durch.

Beispielsweise sind zu dem Suchbegriff "Hausrenovierung" als ähnliche Suchbegriffe "Sanierung", etc., als untergeordnete Suchbegriffe "Malerarbeiten", "Glaserarbeiten", etc. und als ergänzende Suchbegriffe "Architekt", "Statikplanung", etc. hinterlegt.

Die auf diese Weise ausgewählten Anbieterdatensätze D' werden in der Trefferliste L zusammengefasst und dem anfragenden Benutzer 9 übermittelt.

Im Zuge der Kontaktvermittlung wird die Trefferliste L zusammen mit der Suchanfrage S zunächst dem Kontaktmodul 6 zugeleitet. Dies erfolgt wahlweise automatisch, nachdem der anfragende Benutzer 9 die Suchanfrage S abgegeben hat und die Trefferliste L ermittelt ist. Alternativ hierzu wird die Trefferliste L und die Suchanfrage S dem Kontaktmodul 6 erst dann zugeleitet, wenn der Benutzer 9 nach Erhalt der Trefferliste eine entsprechende Bestätigung C2 abgibt, beispielsweise indem er eine hierfür vorgesehene Schaltfläche in der Suchmaske betätigt. Das Kontaktmodul 6 spricht dem anfragenden Benutzer 9 nunmehr "Empfehlungen" aus, indem es einen Kontakt zwischen dem anfragenden Benutzer 9 und Anbietern 7 herstellt, die in der Trefferliste L enthalten sind. Um diese Empfehlungen zielgerichtet zu halten, insbesondere um eine unüberschaubare Informationsflut für den Benutzer 9 zu vermeiden, trifft das Kontaktmodul 6 wiederum eine Auswahl unter den in der Trefferliste L aufgeführten Anbietern 7. Es wählt hierbei nur einen Anbieter 7 oder eine vorgegebene geringe Anzahl von Anbietern 7 aus, denen die bereits erwähnte Aufforderung A übermittelt wird.

Optional werden hierbei nicht alle registrierten Anbieter 7 berücksichtigt, sondern nur solche Anbieter 7, die diesen Service gesondert abonniert haben. Unter diesen Anbietern 7 werden Anbieter 7 mit einer guten Gesamtbewertung B bevorzugt berücksichtigt.

Bei dem von einem Anbieter 7 an das Kontaktmodul 6 rückübermittelten Angebot O handelt es sich, je nachdem wie konkret die Suchanfrage S zu beantworten ist, um eine bloße persönliche Kontaktaufnahme bis hin zu einem konkret nach Leistung und Preis bezifferten Angebot. Insbesondere ist vorgesehen, dass über das Kontaktmodul 6 ein Kommunikationskanal zwischen dem anfragenden Benutzer 9 und dem Anbieter 7 geöffnet wird, über welchen das Angebot O näher abgestimmt werden kann.

Einzelbewertungen b zu einem bestimmten Anbieter 7 können einerseits von Referenzpersonen 8, die dieser Anbieter 7 angegeben hat, andererseits von Benutzern 9 im Bezug auf einen durch das Kontaktmodul 6 vermittelten Auftrag O, wiederum andererseits von Benutzern 10, die mit dem Anbieter 7 in keiner unmittelbaren Beziehung stehen, abgegeben werden. Durch Abgabe einer Einzelbewertung b können damit insbesondere auch Referenzpersonen 8 als "bewertende Benutzer" agieren.

Jede Einzelwertung b erfolgt, indem die Referenzperson 8 bzw. der Benutzer 9,10 in einer im Rahmen der Benutzeroberfläche zur Verfügung gestellten Bewertungsmaske bezüglich einer Anzahl vorgegebener Bewertungskriterien, insbesondere Preis/ Leistung, Service/Qualität, Termintreue und Erreichbarkeit, jeweils eine auf einer Skala von 0 bis 5 variierbare Punktanzahl vergibt. Eine hohe Punktanzahl kennzeichnet dabei eine gute Bewertung, eine niedrige Punktanzahl entsprechend eine schlechte Bewertung. Die Bewertungsmaske enthält des Weiteren ein Textfeld, in welchem die Referenzperson 8 bzw. der Benutzer 9,10 einen Kommentar als Freitext eingeben kann. Zu Identifizierungszwecken wird insbesondere der Benutzer 9 oder 10 bei Abgabe der Einzelbewertung b zur Angabe seiner E-Mail-Adresse aufgefordert. Im Falle einer Referenzperson 8 kann die Angabe der E-Mail-Adresse ebenfalls gefordert werden. Dies ist in diesem Fall aber nicht notwendig, zumal die Identität der Referenzperson 8 bereits durch die bekannte Referenzadresse R feststeht. Der Einzelbewertung b wird automatisch eine Statusanfrage hinzugefügt, die den Status des Bewertenden gegenüber dem Vermittlungssystem 1 und/oder dem bewerteten Anbieter 7 kennzeichnet. Im Einzelnen wird durch die Statusangabe spezifiziert,

- ob die Einzelbewertung b durch den Benutzer 10 im Hinblick auf einen konkreten Auftrag O abgegeben wurde,
- ob die Einzelbewertung b durch die von den bewerteten Anbieter 7 angegebene Referenzperson 8 abgegeben wurde,
- ob die Einzelbewertung b von einem registrierten Benutzer 10 abgegeben wurde oder
- ob die Einzelbewertung b von einem unregistrierten, d. h. dem Vermittlungssystem 1 unbekannten Benutzer 10 abgegeben wurde.

Um eine missbräuchliche Abgabe von Einzelbewertungen b in fremdem Namen zu vermeiden, wird dem Benutzer 9,10 nach Abgabe der Einzelbewertung b eine Bestätigungsanfrage Q1 übermittelt, in welcher der Benutzer 9,10 zur Abgabe einer Bestätigung C3 in Hinblick auf die abgegebene Einzelbewertung b aufgefordert wird. Das Bewertungsmodul 4 generiert diese Bestätigungsanfrage Q1 in Form einer E-Mail, die an die von dem Benutzer 9,10 angegebene E-Mail-Adresse versandt wird. Gibt der Benutzer 9,10 die Bestätigung C3, insbesondere durch Aktivierung einer im Rahmen der Bestätigungsanfrage Q1 zur Verfügung gestellten Schaltfläche ab, so benachrichtigt das Bewertungsmodul 4 mittels einer weiteren Bestätigungsanfrage Q2 den Anbieter 7 von dem Eingang der Einzelbewertung b. Der bewertete Anbieter 7 hat nun die Möglichkeit, zu der Einzelbewertung b eine Stellungnahme C4 abzugeben und an das Bewertungsmodul 5 rückzusenden.

Anhand der abgegebenen Einzelbewertung b sowie anhand von gegebenenfalls bereits früher bezüglich desselben Anbieters 7 abgegebenen Einzelbewertungen b berechnet das Bewertungsmodul 5 die Gesamtbewertung B. Diese Berechnung erfolgt bevorzugt durch eine gewichtete Mittelwertbildung über die vorliegenden Einzelbewertungen b, insbesondere nach den Glg. 1 a und 1b.

$$B = \frac{\sum_{i=1}^{N} \sigma_i \left( c_1 \cdot \kappa_{1i} + c_2 \cdot \kappa_{2i} + c_3 \cdot \kappa_{3i} + c_4 \cdot \kappa_{4i} \right)}{\sum_{i=1}^{N} \sigma_i} \qquad \text{für} \qquad N \geq 1 \qquad \text{Glg. 1a}$$

und

$$B = 0 \qquad \text{für} \qquad N = 0 \qquad \text{Glg. 1b}$$

In den Glg. 1 a und 1 b steht N für die Gesamtanzahl der zu dem Anbieter 7 abgegebenen Einzelbewertungen b. Der Zählindex i bezeichnet eine laufende Nummer der einzelnen Einzelbewertung b. $\sigma_i$ bezeichnet einen nach Maßgabe der Statusangabe variierenden Statusfaktor, mit welchem die i-te Einzelbewertung b im Verhältnis zu den übrigen Einzelbewertungen b gewichtet wird. Beispielsweise gilt

- $\sigma_i = 8$, wenn die Einzelbewertung b von dem Benutzer 9 in Bezug auf ein konkretes Angebot O abgegeben wurde,
- $\sigma_i = 5$, wenn die Einzelbewertung von einer Referenzperson 8 des Anbieters 7 stammt,
- $\sigma_i = 2$, wenn die Einzelbewertung b von einem registrierten Benutzer 10 abgegeben wurde und
- $\sigma_i = 1$, wenn die Einzelwertung b von einem unregistrierten Benutzer 10 abgegeben wurde.

Die Parameter $\kappa_{1i}$ bis $\kappa_{4i}$ enthalten die für die oben genannten Bewertungskriterien im Rahmen der i-ten Einzelbewertung b abgegebenen Punktzahlen. Wurde beispielsweise im Rahmen einer dritten Einzelbewertung (d.h. i = 3) das erste Bewertungskriterium Preis/Leistung mit vier Punkten bewertet, so gilt entsprechend $\kappa_{13} = 4$, etc.

$C_1$ bis $C_4$ repräsentieren Wichtungsfaktoren, die innerhalb einer jeden Einzelbewer tung b die für die Bewertungskriterien abgegebenen Punktzahlen untereinander wichten. Im einfachsten Fall gilt $C_1 = C_2 = C_3 = C_4 = 0{,}25$, so dass jedes Bewertungskriterium in gleichem Maße zu der Einzelbewertung b beiträgt. Alternativ hierzu sind die Wichtungsfaktoren $C_1$-$C_4$ jedoch (zweckmäßigerweise unter der Bedingung $C_1 + C_2 + C_3 + C_4 = 1$) unterschiedlich gewählt. Hierbei sind insbesondere für unterschiedliche Branchen oder Tätigkeitsfelder verschiedene Kombinationen von Wichtungsfaktoren $C_1$-$C_4$ vorgegeben, um den unterschiedlichen Erwartungen an Anbieter 7 unterschiedlicher Branchen bzw. Tätigkeitsfelder Genüge zu tun. Zusätzlich oder alternativ hierzu ist vorgesehen, dass der Benutzer 9,10 bzw, die Referenzperson 8 die Wichtungsfaktoren $c_1$ bis $c_4$ bei Abgabe der Einzelbewertung b benutzerspezifisch einstellen kann. Die benutzerspezifische Einstellung der Wichtungsfaktoren $c_1$ bis $C_4$ erfolgt bevorzugt "unscharf", indem durch die Bewertungsmaske zu jedem Bewertungskriterium z. B. drei Ankreuzfelder zur Verfügung gestellt werden, durch deren alternative Betätigung der Benutzer 9,10 oder die Referenzperson 8 das zugehörige Bewertungskriterium als "besonders wichtig", "wichtig" oder "weniger wichtig" einstufen kann. In Abhängigkeit dieser Einstufung werden dann die Wichtungsfaktoren $C_1$ bis $C_4$ durch das Bewertungsmodul 5 anhand von hinterlegten Berechnungsregeln oder Wertetabellen mit konkreten Zahlenwerten belegt. Wiederum alternativ hierzu kann vorgesehen sein, dass der Benutzer 9,10 oder die Referenzperson 8 die Wichtungsfaktoren $c_1$ bis $c_4$ exakt, insbesondere als Prozentwert, angeben kann.

Wurde zu einem Anbieter 7 bislang noch keine Einzelbewertung b abgegeben, so wird die diesem Anbieter 7 zugeordnete Gesamtbewertung B nach Glg. 1 b formal auf den Wert 0 gesetzt. Neben der Gesamtbewertung B werden auf die Einzelbewertungen b sowie gegebenenfalls die korrespondierenden Stellungnahmen C4 in dem Anbieterdatensatz D abgelegt und können hierdurch von Benutzern 9 im Rahmen einer Suchanfrage S eingesehen werden.

Um im Zuge der Referenzierung eine von dem Anbieter 7 angegebene Referenzadresse R zu verifizieren, generiert das Referenzmodul 5 eine Bestätigungsanfrage Q3 in Form einer E-Mail, die an die Referenzadresse R adressiert ist. Mit der Bestätigungsanfrage Q3 wird die Referenzperson 8 zur Abgabe der bereits erwähnten Bestätigung C1 aufgefordert. Im Rahmen der Bestätigung C1 kann die Referenzperson 8 spezifizieren, ob sie den Anbieter 7 kennt und ob sie einer Hinterlegung der Referenzadresse R im Rahmen des Anbieterdatensatzes D des Anbieters 7 zustimmt. Sofern die Referenzperson 8 beide vorstehend genannten Punkte bestätigt, und somit die Bestätigungsanfrage Q3 positiv quittiert, hinterlegt das Referenzmodul 5 die Referenzadresse R in dem Anbieterdatensatz D. Andernfalls wird die Referenzadresse R verworfen.

Zusammen mit der Bestätigungsanfrage Q3 erhält die Referenzperson 8 auch eine Aufforderung, den Anbieter 7 nach dem vorstehend beschriebenen Verfahren zu bewerten.

In einer Variante des Verfahrens ist vorgesehen, den Grad der Vernetzung des zugehörigen Anbieterdatensatzes D mit Benutzerprofilen registrierter Benutzer 9 als zusätzliche Eingangsgröße bei der Berechnung der Gesamtbewertung B zu berücksichtigen. Hierbei wird jedem anfragenden Benutzer 9 , sofern er in dem Vermittlungssystem 1 registriert ist und somit über ein zugehöriges Benutzerprofil verfügt, die Möglichkeit gegeben, zu jedem der in der Trefferliste L aufgeführten Anbieterdatensätze D' ein sogenanntes Bookmark, d.h. eine Verknüpfung mit dem jeweiligen Anbieterdatensatz D', in seinem Benutzerprofil zu hinterlegen. Die in einem bestimmten Benutzerprofil hinterlegten Bookmarks bilden somit quasi ein benutzerspezifisches Adressverzeichnis von ausgewählten Anbieterdatensätzen D'. Die durch die Bookmarks bewirkte Vernetzung eines Anbieterdatensatzes D mit Benutzerprofilen wird zur Beeinflussung der Gesamtbewertung B ausgenutzt, indem die Anzahl der zu diesem Anbieterdatensatz D insgesamt hinterlegten Bookmarks erfasst wird. Eine zu dieser Anzahl proportionale Größe wird bei der Berechnung der Gesamtbewertung B zu der Summe der Einzelbewertungen b nach den Glg. 1 a bzw. 1 b alternativ addiert oder multipliziert.

## Patentansprüche

1. Vermittlungssystem (1) zur Vermittlung von Adressen und/oder Leistungen gewerblicher Anbieter (7), mit einer Datenbank (2), in der eine Anzahl von jeweils Information zu einem spezifischen Anbieter (7) enthaltenden Anbieterdatensätzen (D) hinterlegt ist, sowie mit einem Auswahlmodul (3), das dazu ausgebildet ist, nach Maßgabe einer von einem anfragenden Benutzer (9) formulierten Suchanfrage (S) aus der Datenbank (2) anfragerelevante Anbieterdatensätze (D) auszuwählen und eine die ausgewählten Anbieterdatensätze (D') enthaltende Trefferliste (L) zu generieren, wobei jedem der in der Datenbank (2) hinterlegten Anbieterdatensätze (D) eine aus Einzelbewertungen (b) von bewertenden Benutzern (8,9,10) abgeleitete Gesamtbewertung (B) zugeordnet ist, und wobei die ausgewählten Anbieterdatensätze (D') in der Trefferliste (L) nach Maßgabe dieser Gesamtbewertung (B) geordnet sind.

2. Vermittlungssystem (1) nach Anspruch 1,
   **gekennzeichnet durch**
   ein Bewertungsmodul (4) zur automatischen Berechnung der Gesamtbewertung (B) eines Anbieterdatensatzes (D) anhand einer zu diesem Anbieterdatensatz (D) abgegebenen Einzelbewertung (b).

3. Vermittlungssystem (1) nach Anspruch 2,
   **dadurch gekennzeichnet,**
   **dass** das Bewertungsmodul (4) dazu ausgebildet ist, eine jede Einzelbewertung (b) nach Maßgabe einer dem bewertenden Benutzer (8,9,10) zugeordneten Statusangabe, die das Verhältnis dieses Benutzers (8,9,10) zu dem Vermittlungssystem (1) und/oder zu dem bewerteten Anbieter (7) klassifiziert, anhand eines hinterlegten Statusfaktors zu wichten.

4. Vermittlungssystem (1) nach Anspruch 2 oder 3,
   **dadurch gekennzeichnet,**
   **dass** eine jede Einzelbewertung (b) in eine Anzahl vorgegebener Bewertungskriterien differenziert ist, wobei das Bewertungsmodul (4) dazu ausgebildet ist, die Bewertungskriterien nach Maßgabe von zugeordneten Wichtungsfaktoren zu wichten.

5. Vermittlungssystem (1) nach Anspruch 4,
   **dadurch gekennzeichnet,**
   **dass** branchenspezifisch verschiedene Wichtungsfaktoren vorgegeben sind.

6. Vermittlungssystem (1) nach Anspruch 4,
**dadurch gekennzeichnet,**
**dass** die Wichtungsfaktoren benutzerspezifisch einstellbar sind.

7. Vermittlungssystem (1) nach einem der Ansprüche 1 bis 6,
**dadurch gekennzeichnet,**
**dass** mindestens ein Anbieterdatensatz (D) eine von dem Anbieter (7) angegebene Referenzadresse (R) einer Referenzperson (8) enthält.

8. Vermittlungssystem (1) nach Anspruch 7,
**gekennzeichnet durch**
ein Referenzmodul (5), das dazu ausgebildet ist, automatisch eine Bestätigungsanfrage (Q3) an die Referenzadresse (R) auszusenden.

9. Vermittlungssystem (1) nach Anspruch 8,
**dadurch gekennzeichnet,**
**dass** das Referenzmodul (5) dazu ausgebildet ist, eine angegebene Referenzadresse (R) bei Bestätigung (C1) der Bestätigungsanfrage (Q3) durch die Referenzperson (8) dem Anbieterdatensatz (D) zuzuordnen.

10. Vermittlungssystem (1) nach Anspruch 8 oder 9,
**dadurch gekennzeichnet,**
**dass** die Bestätigungsanfrage (Q3) eine Aufforderung zur Bewertung des Anbieters (7) durch die Referenzperson (8) umfasst.

11. Vermittlungssystem (1) nach einem der Ansprüche 1 bis 10,
**dadurch gekennzeichnet,**
**dass** das Auswahlmodul (3) dazu ausgebildet ist, eine der Suchanfrage (S) entsprechende Aufforderung (A) zur Abgabe eines Angebots (O) an einen oder mehrere der in der Trefferliste (L) aufgeführten Anbieter (7) zu übermitteln.

12. Vermittlungssystem (1) nach Anspruch 11,
**dadurch gekennzeichnet,**
**dass** das Auswahlmodul (3) dazu ausgebildet ist, das auf die Aufforderung (A) hin abgegebene Angebot (O) an den anfragenden Benutzer (9) weiterzuleiten.

**Europäisches Patentamt**

# EUROPÄISCHER RECHERCHENBERICHT

Nummer der Anmeldung

EP 05 00 6389

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 2003/112952 A1 (BROWN WENDELL ET AL) 19. Juni 2003 (2003-06-19) * Zusammenfassung * * Absätze [0009], [0111] - [0116], [0133] - [0135] * ----- | 1-12 | G06Q30/00 H04M3/493 |
| X | US 2002/078152 A1 (BOONE BARRY) 20. Juni 2002 (2002-06-20) * Zusammenfassung * * Absätze [0016], [0017], [0039] - [0067] * ----- | 1-12 | |
| X | WO 01/65338 A (EBAY, INC; LEVY, DANIELE, V; GROVE, STEVE; MOHNIA, DHEERAJ; POON, ALEX) 7. September 2001 (2001-09-07) * Seite 4, Absatz 2 - Seite 18, Absatz 1 * ----- | 1-12 | |

**RECHERCHIERTE SACHGEBIETE (Int.Cl.7)**

G06F
H04M

Der vorliegende Recherchenbericht wurde für alle Patentansprüche erstellt

| Recherchenort | Abschlußdatum der Recherche | Prüfer |
|---|---|---|
| Den Haag | 21. September 2005 | Willems, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.....................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 05 00 6389

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-09-2005

| Im Recherchenbericht angeführtes Patentdokument | Datum der Veröffentlichung | Mitglied(er) der Patentfamilie | | Datum der Veröffentlichung |
|---|---|---|---|---|
| US 2003112952 A1 | 19-06-2003 | KEINE | | |
| US 2002078152 A1 | 20-06-2002 | CN<br>EP<br>WO | 1636192 A<br>1573608 A2<br>03010621 A2 | 06-07-2005<br>14-09-2005<br>06-02-2003 |
| WO 0165338 A | 07-09-2001 | AU<br>EP | 4192301 A<br>1269288 A2 | 12-09-2001<br>02-01-2003 |

EPO FORM P0461

Für nähere Einzelheiten zu diesem Anhang : siehe Amtsblatt des Europäischen Patentamts, Nr.12/82